# EUROPEAN PATENT SPECIFICATION

(11) **EP 2 479 972 B1**
(45) Date of publication and mention of the grant of the patent: **15.01.2014**
(21) Application number: 12000287.8
(22) Date of filing: 18.01.2012
(51) Int. Cl.: H04M 11/06, H04B 1/58, H04B 3/23, H04L 27/00, H04M 3/00

(54) **Circuit and device for digital subscriber line**
Schaltung und Vorrichtung für eine digitale Teilnehmerleitung
Circuit et dispositif pour ligne d'abonné numérique

(30) Priority: 20.01.2011 CN 201110022958
(43) Date of publication of application: 25.07.2012
(73) Proprietor: Huawei Technologies Co., Ltd., Longgang District, Shenzhen Guangdong 518129 (CN)
(72) Inventor: Zhao, Zhilei, Longgang District Shenzhen Guangdong 518129 (CN)
(74) Representative: Pfenning, Meinig & Partner GbR

(56) References cited:
- EP-A1- 1 429 466
- US-A1- 2002 172 329
- US-B1- 7 061 987

## Description

### FIELD OF THE INVENTION

The present invention relates to the field of digital subscriber line technologies, and in particular, to a circuit and device for a digital subscriber line.

### BACKGROUND OF THE INVENTION

An xDSL (x digital subscriber line) is a general term of various types of DSLs (digital subscriber line), and is a point-to-point transmission technology with a copper telephone line as a transmission medium. The DSL technology supports a symmetrical and an asymmetrical transmission mode in a subscriber loop of a POTS (Plain Old Telephone Service, plain old telephone service), which solves the transmission bottleneck of the "Last Mile" problem frequently occurring between a network service provider and an end subscriber. Because the telephone subscriber loop has been extensively laid, implementation of high-speed access through a copper twisted pair by fully utilizing the existing copper cable resources becomes a most practical solution of a broadband access network with the minimum cost for an operator. The DSL technology is widely used at present, and is a rather mature access technology.

However, because original POTS and ISDN (Integrated Services Digital Network, integrated services digital network) services on a copper line occupy different bandwidths, an AnnexA mode is defined in DSL standards to support the application of OverPOTS. In this mode, a DSL system may be used at the same time on the same twisted pair with the original POTS service. Meanwhile, an AnnexB mode is defined to support the application of OverISDN, that is, the mode may be used at the same time on the same twisted pair with the original ISDN service. An uplink frequency band in the AnnexA mode of the DSL is from 25 k to 138 k, the frequency band below 25 k is reserved for the POTS, and the lowest frequency point of a downlink frequency band is 138 k. An uplink frequency band in the AnnexB mode is from 138 k to 276 k, the frequency band below 138 k is reserved for the ISDN, and the lowest frequency point of a downlink frequency band is 276 k.

The prior art has the following disadvantages: Current DSL circuit solutions use two different sets of circuits to support the AnnexA mode and the AnnexB mode, and the two sets of circuits are respectively compatible with the original POTS service and the ISDN service on the copper line, so it is required to design two boards to respectively support the POTS service and the ISDN service for each DSL solution, which results in many types of boards and a large number of part numbers existing in a current DSL circuit.

D1=US7061987 B1 discloses an analog front-end and method that supports multiple digital subscriber line standards, including asymmetric digital subscriber line and very- high speed digital subscriber line. The circuit incorporates multiple circuit blocks that can be selectively included into the transmit and receive paths of a DSL signal.

D2=EP 1429466 A1 discloses a frequency dependent telecommunication hybrid circuit adapted to operate according to the Asymmetric Digital Subscriber Line protocol wherein the frequencies of the receive frequency band are lower than those of the transmit frequency band.

D3=US 2002/172329 A1 discloses SELP techniques that provide an accurate estimate of the length of a transmission medium.

### SUMMARY OF THE INVENTION

Accordingly, an objective of the present invention is to provide a circuit and device for a digital subscriber line, which support an AnnexA mode and an AnnexB mode at the same time, and are compatible with an original POTS service and an ISDN service on a copper line.

An embodiment of the present invention further provides a digital subscriber line circuit, where the circuit includes: a line driver, an echo cancellation module, and a transformer module, the digital subscriber line circuit future comprises a first high-pass filter and a bypassable high-pass filter.

An output end of the line driver is connected to one end of the echo cancellation module through the first high-pass filter, the other end of the echo cancellation module is connected to the transformer module, and an output end of the echo cancellation module is connected to the bypassable high-pass filter.

the first high-pass filter is adapted to select a cut-off frequency point to normally send a downlink signal of AnnexA mode, wherein the downlink signal of AnnexA mode received from the line driver successfully passes through the first high-pass filter, and is sent to the transformer module.

The transformer module is a high-pass filter and is adapted to send and receive a signal on a same channel, a cut-off frequency point of the high-pass filter is adapted to selected when a receiving channel of the high-pass filter receives an uplink signal of AnnexA mode and part of ISDN signals, and a sending channel of the high-pass filter is adapted to senda downlink signal of AnnexA mode.

The first high-pass filter is adapted to send a downlink signal of AnnexA mode.

The bypassable high-pass filter is adapted to filter out an ISDN signal when being used in cooperation with an ISDN, and is bypassable and is adapted to receive an uplink signal of AnnexA mode when being used in cooperation with a POTS.

When the digital subscriber line circuit is used in cooperation with the ISDN service, the bypassable high-pass filter is adapted to perform low-frequency filtering on the received signal and filter out an ISDN signal, and an uplink frequency band in the AnnexB mode is adapted to pass through the bypassable high-pass filter; when the digital subscriber line circuit is used in cooperation with the POTS service, the bypassable high-pass filter is bypassed at this time to allow an uplink frequency band in the AnnexA mode to pass through;
wherein in the AnnexA mode, an uplink frequency band of the DSL is from 25 kHz to 138 kHz, and the lowest frequency point of a downlink frequency band is 138 kHz; in the AnnexB mode, an uplink frequency band is from 138 kHz to 276 kHz, and the lowest frequency point of a downlink frequency band is 276 kHz.

An embodiment of the present invention further provides a digital subscriber line device, where the device includes the digital subscriber line circuit.

According to the specific embodiments provided by the present invention, the present invention discloses the following technical effects:

The circuit and device for a digital subscriber line in the embodiments of the present invention may support receiving services both in the AnnexA mode and in the AnnexB mode, and is compatible with the original POTS service and ISDN service on the copper line. Compared with the prior art in which two boards are required and two different sets of circuits are designed, in the DSL circuit in the embodiments of the present invention, fewer types of boards and fewer part numbers are used.

### BRIEF DESCRIPTION OF THE DRAWINGS

FIG. 1 is a circuit diagram of a digital subscriber line according to a first embodiment of the present invention;
FIG. 2 is a circuit diagram of a digital subscriber line according to a second embodiment of the present invention;
FIG. 3 is a circuit diagram of a digital subscriber line according to a third embodiment of the present invention;
FIG. 4 is a circuit diagram of a digital subscriber line according to a fourth embodiment of the present invention; and
FIG. 5 is a structural diagram of a digital subscriber line device according to an embodiment of the present invention.

### DETAILED DESCRIPTION OF THE EMBODIMENTS

In order to make the foregoing objectives, features, and advantages of the present invention clearer and more comprehensible, the present invention is further described in detail below with reference to the accompanying drawings and specific embodiments.

Accordingly, an objective of the present invention is to provide a circuit and device for a digital subscriber line, which support an AnnexA mode and an AnnexB mode at the same time, and are compatible with an original POTS service and ISDN service on a copper line. In such an xDSL circuit, fewer types of boards and fewer part numbers exist.

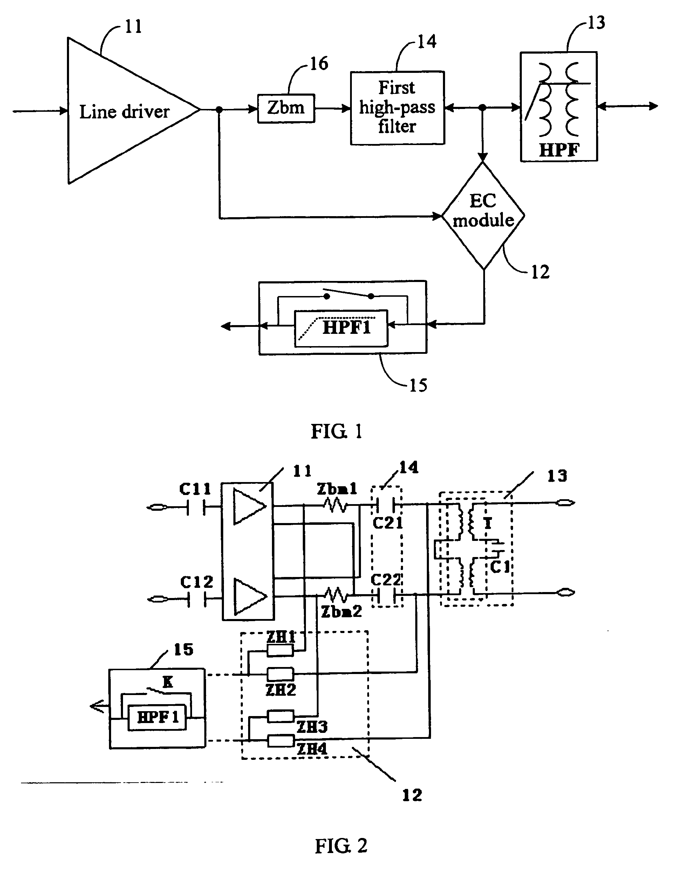

FIG. 1 is a circuit diagram of a digital subscriber line according to a first embodiment of the present invention. The circuit shown in FIG. 1 includes: a line driver 11, an EC (Echo Cancellation, echo cancellation) module 12, a transformer module 13, a first high-pass filter 14, an impedance Zbm 16, and a bypassable high-pass filter 15. An output end of the line driver 11 is connected to one end of the impedance Zbm 16 and one end of the EC module 12, the other end of the impedance Zbm 16 is connected to one end of the first high-pass filter 14, and the other end of the first high-pass filter 14 is connected to the other end of the EC module 12 and the transformer module 13. An output end of the EC module 12 is connected to the bypassable high-pass filter 15.

The transformer module 13 is a high-pass filter, and uses a same channel to send and receive a signal. Filtering characteristics of the transformer module 13 are that, an uplink signal of AnnexA and part of ISDN signals can be normally received, and a downlink signal of AnnexA can be normally sent.

A cut-off frequency point of the first high-pass filter 14 is selected so that a downlink signal of AnnexA can be sent, and the impedance viewing from the EC module 12 is increased with the reduction of the frequency.

A cut-off frequency point of the bypassable high-pass filter 15 is selected so that an ISDN signal can be filtered out. The bypassable high-pass filter 15 is configured to filter out an ISDN signal when being used in cooperation with an ISDN, and be bypassable and receive an uplink signal of AnnexA when being used in cooperation with a POTS.

Preferably, the bypassable high-pass filter 15 may specifically include a high-pass filter HPF (High Pass Filter) and a bypass switch.

A cut-off frequency point of the high-pass filter is selected so that an ISDN signal can be filtered out.

The bypass switch is connected in parallel to two ends of the high-pass filter, and is configured to be connected to the high-pass filter when being used in cooperation with the ISDN, and bypasses the high-pass filter when being used in cooperation with the POTS.

The line driver 11 is configured to amplify the power of a sent signal, so as to meet DSL signal transmission power requirements, and cooperate with the impedance Zbm 16 and the transformer module 13, so that a port impedance of the circuit matches a characteristic impedance of the line.

The impedance Zbm 16 is configured to cooperate with the line driver 11 and the transformer module 13, so that a port impedance of the circuit matches a characteristic impedance of the line.

The EC module 12 is configured to, on one end, sample a signal sent from the line driver, on the other end, sample a signal (including a sent signal and a received signal) between the first high-pass filter 14 and the transformer module 13, offset the sent signal inside the EC module 12, so that the sent signal cannot enter the bypassable high-pass filter 15, but the received signal may reach the bypassable high-pass filter 15.

Preferably, the bypassable high-pass filter 15 may be implemented by using a discrete simulator, or is integrated and implemented in an analog domain of a chip, or is implemented in a time domain of a digital domain in a chip, or is implemented in a frequency domain of a digital domain in a chip.

Preferably, a cut-off frequency point of the bypassable high-pass filter 15 may be approximately from 120 k to 138 k.

The working principle of the DSL circuit shown in FIG. 1 is analyzed as follows:
First, it should be noted that, an uplink frequency band in the AnnexA mode of the DSL is from 25 k to 138 k, the frequency band below 25 k is reserved for the POTS, and the lowest frequency point of a downlink frequency band is 138 k. An uplink frequency band in the AnnexB mode is from 138 k to 276 k, the frequency band below 138 k is reserved for the ISDN, and the lowest frequency point of a downlink frequency band is 276 k.

In the first embodiment of the present invention, the cut-off frequency point of the first high-pass filter 14 is selected so that a downlink signal of AnnexA can be normally sent. Because the lowest frequency point of the downlink frequency band in the AnnexA mode is 138 k, the signals over 138 k in the signals received from the line driver 11 can successfully pass through low-frequency filtering of the first high-pass filter 14, and are sent to the transformer module 13. The cut-off frequency point of a high-pass filter formed by the transformer module 13 is selected so that the downlink signal can be normally sent in the AnnexA mode, and because the lowest frequency point of the downlink frequency band in the AnnexA mode is 138 k, it can be known that the DSL circuit may send all the signals over 138 k. The lowest frequency point of the downlink frequency band in the AnnexB mode is 276 k, therefore the transformer module 13 may also realize the sending of the downlink signal in the AnnexB mode. Thus it can be known that, the DSL circuit of the present invention may support the sending services both in the AnnexA mode and in the AnnexB mode.

The cut-off frequency point of the high-pass filter formed by the transformer module 13 can receive the uplink signal of AnnexA and part of ISDN signals, that is, the receiving channel may receive all the signals over 25 k. All the received signals over 25 k are directly sent to the bypassable high-pass filter 15 through the EC module 12. When the DSL circuit is used in cooperation with the ISDN service, the bypassable high-pass filter 15 is connected to the circuit, and performs low-frequency filtering on the received signal. The cut-off frequency point of the bypassable high-pass filter 15 is selected so that an ISDN signal can be filtered out, that is, only the signals over 138 k can pass through. Because the uplink frequency band in the AnnexB mode is from 138 k to 276 k, all the signals in the AnnexB mode may pass through the bypassable high-pass filter 15 at this time, so as to realize the support for the AnnexB mode. When the DSL circuit is used in cooperation with the POTS service, because the uplink frequency band in the AnnexA mode is from 25 k to 138 k, the bypassable high-pass filter 15 is bypassed at this time to allow the received signals from 25 k to 138 k to pass through, so as to realize the support for the AnnexA mode.

Thus it can be known that, the DSL circuit of the present invention may support the receiving services both in the AnnexA mode and in the AnnexB mode.

Therefore, the DSL circuit in the embodiment of the present invention can support both the AnnexA mode and the AnnexB mode, and is compatible with the original POTS service and ISDN service on the copper line. Compared with the prior art in which two boards are required and two different sets of circuits are designed, in the DSL circuit in the embodiment of the present invention, fewer types of boards and fewer part numbers are used.

FIG. 2 is a circuit diagram of a digital subscriber line according to a second embodiment of the present invention. The circuit shown in FIG. 2 is a specific implementation of the circuit shown in FIG. 1. Certainly, the circuit of the present invention is not limited to the implementation shown in FIG. 2, and may also adopt other implementations in other embodiments of the present invention.

In the second embodiment of the present invention, the transformer module 13 may include a transformer and peripheral capacitors, and has the characteristics of a high-pass filter. As shown in FIG. 2, the transformer module 13 may include: a transformer T1 and a first capacitor C1, the first capacitor C1 is connected in a middle of a primary winding of the transformer T1, one end of a secondary winding of the transformer T1 is a first input end of the transformer module 13, and the other end of the secondary winding of the transformer T1 is a second input end of the transformer module 13.

Two ends of the secondary winding of the transformer T1 are synonym ends to each other. The first high-pass filter 14 includes a second capacitor C21 and a third capacitor C22.

The impedance Zbm 16 includes a first impedance Zbm1 and a second impedance Zbm2.

The line driver 11 is a first differential amplifier. A first input end of the first differential amplifier is connected to a first receiving end of the DSL circuit through a fourth capacitor C11, and a second input end of the first differential amplifier is connected to a second receiving end of the DSL circuit through a fifth capacitor C12. A first output end of the first differential amplifier is connected to a first input end of the transformer module 13 through the first impedance Zbm1 and the second capacitor C21, and a second output end of the first differential amplifier is connected to the second input end of the transformer module 13 through the second impedance Zbm2 and the third capacitor C22.

Preferably, the line driver 11 may be a differential amplifier formed by two amplifiers.

The EC module 12 is an impedance network. Specifically, the EC module 12 may include a third impedance ZH1, a fourth impedance ZH2, a fifth impedance ZH3, and a sixth impedance ZH4. One end of the third impedance ZH1 is connected to the first output end of the first differential amplifier, and the other end of the third impedance ZH1 is connected to a first input end of the bypassable high-pass filter 15. One end of the fourth impedance ZH2 is connected to the second input end of the transformer module 13, and the other end of the fourth impedance ZH2 is connected to the first input end of the bypassable high-pass filter 15. One end of the fifth impedance ZH3 is connected to the second output end of the first differential amplifier, and the other end of the fifth impedance ZH3 is connected to a second input end of the bypassable high-pass filter 15. One end of the sixth impedance ZH4 is connected to the first input end of the transformer module 13, and the other end f the sixth impedance ZH4 is connected to the second input end of the bypassable high-pass filter 15.

The bypassable high-pass filter 15 includes a high-pass filter HPF1 and a bypass switch K. A first input end of the high-pass filter HPF1 is the first input end of the bypassable high-pass filter 15, and a second input end of the high-pass filter HPF1 is the second input end of the bypassable high-pass filter 15. An output end of the high-pass filter HPF1 is the output end of the bypassable high-pass filter 15, and is a signal sending end of the DSL circuit at the same time.

The bypass switch K is connected in parallel between the input end of the high-pass filter HPF1 and the output end of the high-pass filter HPF1.

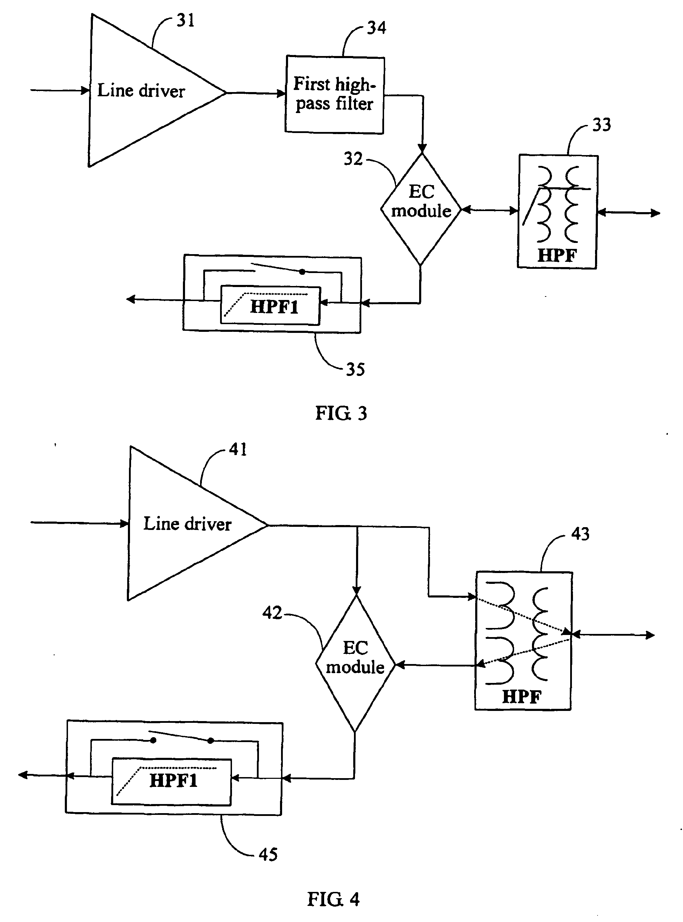

FIG. 3 is a circuit diagram of a digital subscriber line according to a third embodiment of the present invention. The circuit shown in FIG. 3 includes: a line driver 31, an EC module 32, a transformer module 33, a first high-pass filter 34, and a bypassable high-pass filter 35.

An output end of the line driver 31 is connected to one end of the EC module 32 through the first high-pass filter 34, and the other end of the EC module 32 is connected to the transformer module 33. An output end of the EC module 32 is connected to the bypassable high-pass filter 35.

The transformer module 33 is a high-pass filter, and uses a same channel to send and receive a signal. Filtering characteristics of the transformer module 33 are that, an uplink signal of AnnexA and part of ISDN signals can be normally received, and a downlink signal of AnnexA can be normally sent.

A cut-off frequency point of the first high-pass filter 34 is selected so that a downlink signal of AnnexA can be sent, and the impedance viewing from the EC module 32 is increased with the reduction of the frequency.

A cut-off frequency point of the bypassable high-pass filter 35 is selected so that an ISDN signal can be filtered out. The bypassable high-pass filter 35 is configured to filter out an ISDN signal when being used in cooperation with an ISDN, and be bypassable and receive an uplink signal of AnnexA when being used in cooperation with a POTS.

The specific implementation of the bypassable high-pass filter 35 is the same as that described in the first embodiment, which is not repeatedly described here.

The working principle of the DSL circuit shown in FIG. 3 is analyzed as follows:
In the third embodiment of the present invention, the cut-off frequency point of the first high-pass filter 34 is selected so that a downlink signal of AnnexA can be normally sent. Because a lowest frequency point of a downlink frequency band in the AnnexA mode is 138 k, the signals over 138 k in the signals received from the line driver 31 can successfully pass through low-frequency filtering of the first high-pass filter 34, and are sent to the transformer module 33 through the EC module 32. Because a cut-off frequency point of a high-pass filter formed by the transformer module 33 is selected so that the downlink signal in the AnnexA mode can be normally sent, it can be known that all the signals over 138 k sent to the transformer module 33 can all be successfully sent, so as to send the downlink signal in the AnnexA mode. It can be known from common sense that, a lowest frequency point of a downlink frequency band in the AnnexB mode is 276 k, therefore the transformer module 33 may also realize the sending of the downlink signal in the AnnexB mode. Thus it can be known that, the DSL circuit of the present invention may support the sending services both in the AnnexA mode and in the AnnexB mode.

The cut-off frequency point of the high-pass filter formed by the transformer module 33 can receive the uplink signal of AnnexA and part of ISDN signals, that is, the receiving channel may receive all the signals over 25 k. All the received signals over 25 k are sent to the bypassable high-pass filter 35 through the EC module 32. When the DSL circuit is used in cooperation with the ISDN service, the bypassable high-pass filter 35 is connected to the circuit, and performs low-frequency filtering on the received signal. The cut-off frequency point of the bypassable high-pass filter 35 is selected so that an ISDN signal can be filtered out, that is, only the signals over 138 k can pass through. Because an uplink frequency band in the AnnexB mode is from 138 k to 276 k, all the signals in the AnnexB mode may pass through the bypassable high-pass filter 35 at this time, so as to realize the support for the AnnexB mode. When the DSL circuit is used in cooperation with the POTS service, because an uplink frequency band in the AnnexA mode is from 25 k to 138 k, the bypassable high-pass filter 35 is bypassed at this time to allow the received signals from 25 k to 138 k to pass through, so as to realize the support for the AnnexA mode.

Thus it can be known that, the DSL circuit of the present invention may support the receiving services both in the AnnexA mode and in the AnnexB mode.

Therefore, the DSL circuit in the embodiment of the present invention can support both the AnnexA mode and the AnnexB mode, and is compatible with the original POTS service and ISDN service on the copper line. Compared with the prior art in which two boards are required and two different sets of circuits are designed, in the DSL circuit in the embodiment of the present invention, fewer types of boards and fewer part numbers are used.

FIG. 4 is a circuit diagram of a digital subscriber line according to a fourth embodiment of the present invention. The circuit shown in FIG. 4 includes: a line driver 41, an EC module 42, a transformer module 43, and a bypassable high-pass filter 45.

An output end of the line driver 41 is connected to one end of the EC module 42 and a sending channel of the transformer module 43, and the other end of the EC module 42 is connected to a receiving channel of the transformer module 43. An output end of the EC module 42 is connected to the bypassable high-pass filter 45.

The transformer module 43 is a high-pass filter, and includes a sending channel and a receiving channel that are mutually independent. A cut-off frequency point of the sending channel of the high-pass filter can filter out an ISDN signal, and the impedance of a port with a frequency band below the cut-off frequency point is gradually increased. A cut-off frequency point of the receiving channel of the high-pass filter can receive an uplink signal of AnnexA and part of ISDN signals.

The bypassable high-pass filter 45 is configured to filter out an ISDN signal when being used in cooperation with an ISDN, and be bypassable and receive an uplink signal of AnnexA when being used in cooperation with a POTS.

The working principle of the DSL circuit shown in FIG. 4 is analyzed as follows:
In the fourth embodiment of the present invention, the cut-off frequency point of the sending channel of the high-pass filter of the transformer module 43 can filter out an ISDN signal, that is, the sending channel may send all the signal over 138 k. Because the lowest frequency point of a downlink frequency band in the AnnexA mode is 138 k, and the lowest frequency point of a downlink frequency band in the AnnexB mode is 276 k, it can be known that the DSL circuit of the present invention may support the sending services both in the AnnexA mode and in the AnnexB mode.

The cut-off frequency point of the receiving channel of the high-pass filter of the transformer module 43 can receive an uplink signal of AnnexA and part of ISDN signals, that is, the receiving channel may receive all the signals over 25 k. All the received signals over 25 k are sent to the bypassable high-pass filter 45 through the EC module 42. When the DSL circuit is used in cooperation with the ISDN service, because the uplink frequency band in the AnnexB mode is from 138 k to 276 k, an ISDN signal may be filtered out through the bypassable high-pass filter 45, and only the signals over 138 k are received, so as to realize the support for the AnnexB mode. When the DSL circuit is used in cooperation with the POTS service, because the uplink frequency band in the AnnexA mode is from 25 k to 138 k, the bypassable high-pass filter 45 is bypassed at this time to allow the signals from 25 k to 138 k to pass through, so as to realize the support for the AnnexA mode. Thus it can be known that, the DSL circuit of the present invention may support the receiving services both in the AnnexA mode and in the AnnexB mode.

Therefore, the DSL circuit in the embodiment of the present invention can support both the AnnexA mode and the AnnexB mode, and is compatible with the original POTS service and ISDN service on the copper line. Compared with the prior art in which two boards are required and two different sets of circuits are designed, in the DSL circuit in the embodiment of the present invention, fewer types of boards and fewer part numbers are used.

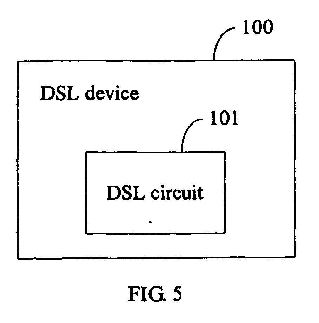

Corresponding to the DSL circuit in the embodiments of the present invention, an embodiment of the present invention further provides a digital subscriber line device. FIG. 5 is a structural diagram of a digital subscriber line device according to an embodiment of the present invention.

As shown in FIG. 5, the DSL device 100 includes a DSL circuit 101. The DSL circuit 101 may be the DSL circuit in any one of the embodiments of the present invention.

Therefore, the DSL device 100 in the embodiment of the present invention can support both a AnnexA mode and a AnnexB mode at the same time, and is compatible with an original POTS service and ISDN service on a copper line.

The circuit and device for a digital subscriber line provided in the present invention are described in detail above. The principles and implementations of the present invention are described here by using specific examples. The description about the embodiments is merely used to help understand the method and core ideas of the present invention. Meanwhile, persons of ordinary skill in the art may make variations and modifications to the present invention in terms of the specific implementations and application scopes according to the ideas of the present invention. Therefore, the specification shall not be construed as a limit to the present invention.

## Claims

1. A digital subscriber line circuit, wherein the circuit comprises:
a line driver (11, 31), an echo cancellation module (12, 32), and a transformer module (13,33),
**characterized in that**
the digital subscriber line circuit further comprises a first high-pass filter (14, 34) and a bypassable high-pass filter (15, 35), wherein
an output end of the line driver (11, 31) is connected to one end of the echo cancellation module (12, 32) through the first high-pass filter (14, 34), the other end of the echo cancellation module (12, 32) is connected to the transformer module (13, 33), and an output end of the echo cancellation module (12, 32) is connected to the bypassable high-pass filter (1 5, 35);
the first high-pass filter (14, 34) is adapted to select a cut-off frequency point to normally send a downlink signal of AnnexA mode, wherein the downlink signal of AnnexA mode received from the line driver (11, 31) successfully passes through the first high-pass filter (14, 34), and is sent to the transformer module (13, 33);
the transformer module (13,33) is a high-pass filter and is adapted to send and receive a signal on a same channel, a cut-off frequency point of the high-pass filter is adapted to be selected when a receiving channel of the high-pass filter receives an uplink signal of AnnexA mode and part of ISDN signals, and a sending channel of the high-pass filter is adapted to send a downlink signal of AnnexA mode;
the first high-pass filter (14, 34) is adapted to send a downlink signal of AnnexA mode; and
the bypassable high-pass filter (15, 35) is adapted to filter out an ISDN signal when being used in cooperation with an ISDN, and is bypassable and is adapted to receive an uplink signal of AnnexA mode when being used in cooperation with a POTS;
when the digital subscriber line circuit is used in cooperation with the ISDN service, the bypassable high-pass filter (15, 35) is adapted to perform low-frequency filtering on the received signal and filter out an ISDN signal, and an uplink frequency band in the AnnexB mode is adapted to pass through the bypassable high-pass filter (15, 35); when the digital subscriber line circuit is used in cooperation with the POTS service, the bypassable high-pass filter (15, 35) is bypassed at this time to allow an uplink frequency band in the AnnexA mode to pass through;
wherein in the AnnexA mode, an uplink frequency band of the DSL is from 25 kHz to 138 kHz, and the lowest frequency point of a downlink frequency band is 138 kHz; in the AnnexB mode, an uplink frequency band of the DSL is from 138 kHz to 276 kHz, and the lowest frequency point of a downlink frequency band is 276 kHz.

2. The digital subscriber line circuit according to claim 1, wherein the circuit further comprises:
an impedance (16), wherein
an output end of the line driver (11, 31) is connected to one end of the impendance (16) and one end of the echo cancellation module (12, 32), the other end of the impedance (16) is connected to one end of the first high-pass filter (14, 34).

3. The digital subscriber line circuit according to claim 2, wherein the transformer module 13 comprises:
a transformer and a first capacitor;
the first capacitor is connected in a middle of a primary winding of the transformer; and
one end of a secondary winding of the transformer is a first input end of the transformer module (13, 33), and the other end of the secondary winding of the transformer is a second input end of the transformer module (13, 33).

4. The digital subscriber line circuit according to claim 3, wherein the first high-pass filter (14) comprises a second capacitor and a third capacitor, and the impedance (16) comprises a first impedance and a second impedance.

5. The digital subscriber line circuit according to claim 4, wherein the line driver (11, 31) is a first differential amplifier;
a first input end of the first differential amplifier is connected to a first receiving end of the digital subscriber line circuit through a fourth capacitor, and a second input end of the first differential amplifier is connected to a second receiving end of the digital subscriber line circuit through a fifth capacitor; and
a first output end of the first differential amplifier is connected to a first input end of the transformer module (13, 33) through the first impedance and the second capacitor, and a second output end of the first differential amplifier is connected to a second input end of the transformer module (13, 33) through the second impedance and the third capacitor.

6. The digital subscriber line circuit according to claim 5, wherein the EC module (12, 32) comprises:
a third impedance, a fourth impedance, a fifth impedance, and a sixth impedance;
one end of the third impedance is connected to the first output end of the first differential amplifier, and the other end of the third impedance is connected to a first input end of the bypassable high-pass filter (15, 35);
one end of the fourth impedance is connected to the second input end of the transformer module (13, 33), and the other end of the fourth impedance is connected to the first input end of the bypassable high-pass filter (15, 35);
one end of the fifth impedance is connected to the second output end of the first differential amplifier, and the other end of the fifth impedance is connected to a second input end of the bypassable high-pass filter (15, 35); and
one end of the sixth impedance is connected to the first input end of the transformer module (13, 33), and the other end of the sixth impedance is connected to the second input end of the bypassable high-pass filter (15, 35).

7. The digital subscriber line circuit according to claim 6, wherein the bypassable high-pass filter 15 comprises: a high-pass filter and a bypass switch; and
the bypass switch is connected in parallel between an input end of the high-pass filter and an output end of the high-pass filter.

8. The digital subscriber line circuit according to claim 2, wherein the bypassable high-pass filter 15 is implemented by using a discrete simulator, or is integrated and implemented in an analog domain of a chip, or is implemented in a time domain of a digital domain in a chip, or is implemented in a frequency domain of a digital domain in a chip.

9. A digital subscriber line device, wherein the device comprises the digital subscriber line circuit according to any one of claims 1 to 8.

## Patentansprüche

1. Digitale Teilnehmerleitungsschaltung, wobei die Schaltung Folgendes umfasst:
einen Leitungsverstärker (11, 31), ein Echounterdrückungsmodul (12, 32) und ein Transformatormodul (13, 33), **dadurch gekennzeichnet, dass**
die digitale Teilnehmerleitungsschaltung ferner ein erstes Hochpassfilter (14, 34) und ein umgehbares Hochpassfilter (15, 35) umfasst, wobei
ein Ausgangsende des Leitungsverstärkers (11, 31) mit einem Ende des Echounterdrückungsmoduls (12, 32) durch das erste Hochpassfilter (14, 34) verbunden ist, das andere Ende des Echounterdrückungsmoduls (12, 32) mit dem Transformatormodul (13, 33) verbunden ist und ein Ausgangsende des Echounterdrückungsmoduls (12, 32) mit dem umgehbaren Hochpassfilter (15, 35) verbunden ist;
das erste Hochpassfilter (14, 34) ausgelegt ist, einen Grenzfrequenzpunkt auszuwählen, um normalerweise ein Abwärtsstreckensignal der AnnexA-Betriebsart zu senden, wobei das Abwärtsstreckensignal der AnnexA-Betriebsart, das von dem Leitungsverstärker (11, 31) empfangen wird, erfolgreich durch das erste Hochpassfilter (14, 34) hindurch tritt und zu dem Transformatormodul (13, 33) gesendet wird;
das Transformatormodul (13, 33) ein Hochpassfilter ist und ausgelegt ist, ein Signal auf einem gleichen Kanal zu senden und zu empfangen, wobei ein Grenzfrequenzpunkt des Hochpassfilters ausgelegt ist, ausgewählt zu werden, wenn ein Empfangskanal des Hochpassfilters ein Aufwärtsstreckensignal der AnnexA-Betriebsart und Teil von ISDN-Signalen empfängt, und ein Sendekanal des Hochpassfilters ausgelegt ist, ein Abwärtsstreckensignal der AnnexA-Betriebsart zu senden;
das Hochpassfilter (14, 34) ausgelegt ist, ein Abwärtsstreckensignal der AnnexA-Betriebsart zu senden; und
das umgehbare Hochpassfilter (15, 35) ausgelegt ist, ein ISDN-Signal auszufiltern, wenn es in Zusammenarbeit mit einem ISDN verwendet wird, und umgehbar ist und ausgelegt ist, ein Aufwärtsstreckensignal der AnnexA-Betriebsart zu empfangen, wenn es in Zusammenarbeit mit einem POTS verwendet wird;
dann, wenn die digitale Teilnehmerleitungsschaltung in Zusammenarbeit mit dem ISDN-Dienst verwendet wird, das umgehbare Hochpassfilter (15, 35) ausgelegt ist, Niederfrequenzfiltern auf dem empfangenen Signal auszuführen und ein ISDN-Signal auszufiltern, und ein Aufwärtsstreckenfrequenzband in der AnnexB-Betriebsart ausgelegt ist, durch das umgehbare Hochpassfilter (15, 35) hindurchzutreten; dann, wenn die digitale Teilnehmerleitungsschaltung in Zusammenarbeit mit dem POTS-Dienst verwendet wird, das umgehbare Hochpassfilter (15, 35) zu dieser Zeit umgangen wird, um zu ermöglichen, dass ein Aufwärtsstreckenfrequenzband in der AnnexA-Betriebsart hindurchtreten kann;
wobei in der AnnexA-Betriebsart ein Aufwärtsstreckenfrequenzband des DSL im Bereich von 25 kHz bis 138 kHz liegt und der niedrigste Frequenzpunkt eines Abwärtsstreckenfrequenzbandes 138 kHz ist; wobei in der AnnexB-Betriebsart ein Aufwärtsstreckenfrequenzband des DSL im Bereich von 138 kHz bis 276 kHz liegt und der niedrigste Frequenzpunkt eines Abwärtsstreckenfrequenzbandes 276 kHz ist.

2. Digitale Teilnehmerleitungsschaltung nach Anspruch 1, wobei die Schaltung ferner Folgendes umfasst: eine Impedanz (16), wobei
ein Ausgangsende des Leitungsverstärkers (11, 31) mit einem Ende der Impedanz (16) und einem Ende des Echounterdrückungsmoduls (12, 32) verbunden ist und das andere Ende der Impedanz (16) mit einem Ende des ersten Hochpassfilters (14, 34) verbunden ist.

3. Digitale Teilnehmerleitungsschaltung nach Anspruch 2, wobei das Transformatormodul 13 Folgendes umfasst: einen Transformator und einen ersten Kondensator;
wobei der erste Kondensator mit einer Mitte einer Primärwicklung des Transformators verbunden ist; und
ein Ende einer Sekundärwicklung des Transformators ein erstes Eingangsende des Transformatormoduls (13, 33) ist und das andere Ende der Sekundärwicklung des Transformators ein zweites Eingangsende des Transformatormoduls (13, 33) ist.

4. Digitale Teilnehmerleitungsschaltung nach Anspruch 3, wobei das erste Hochpassfilter (14) einen zweiten Kondensator und einen dritten Kondensator umfasst und die Impedanz (16) eine erste Impedanz und eine zweite Impedanz umfasst.

5. Digitale Teilnehmerleitungsschaltung nach Anspruch 4, wobei der Leitungsverstärker (11, 31) ein erster Differenzverstärker ist,
ein erstes Eingangsende des ersten Differenzverstärkers mit einem ersten Empfangsende der digitalen Teilnehmerleitungsschaltung durch einen vierten Kondensator verbunden ist und ein zweites Eingangsende des ersten Differenzverstärkers mit einem zweiten Empfangsende der digitalen Teilnehmerleitungsschaltung durch einen fünften Kondensator verbunden ist, und
ein erstes Ausgangsende des ersten Differenzverstärkers mit einem ersten Eingangsende des Transformatormoduls (13, 33) durch die erste Impedanz und den zweiten Kondensator verbunden ist und ein zweites Ausgangsende des ersten Differenzverstärkers mit einem zweiten Eingangsende des Transformatormoduls (13, 33) durch die zweite Impedanz und den dritten Kondensator verbunden ist.

6. Digitale Teilnehmerleitungsschaltung nach Anspruch 5, wobei das EC-Modul (12, 32) Folgendes umfasst: eine dritte Impedanz, eine vierte Impedanz, eine fünfte Impedanz und eine sechste Impedanz;
wobei ein Ende der dritten Impedanz mit dem ersten Ausgangsende des ersten Differenzverstärkers verbunden ist und das andere Ende der dritten Impedanz mit einem ersten Eingangsende des umgehbaren Hochpassfilters (15, 35) verbunden ist;
ein Ende der vierten Impedanz mit dem zweiten Eingangsende des Transformatormoduls (13, 33) verbunden ist und das andere Ende der vierten Impedanz mit einem ersten Eingangsende des umgehbaren Hochpassfilters (15,35) verbunden ist;
ein Ende der fünften Impedanz mit dem zweiten Ausgangsende des ersten Differenzverstärkers verbunden ist und das andere Ende der fünften Impedanz mit einem zweiten Eingangsende des umgehbaren Hochpassfilters (15, 35) verbunden ist; und
ein Ende der sechsten Impedanz mit dem ersten Eingangsende des Transformatormoduls (13, 33) verbunden ist und das andere Ende der sechsten Impedanz mit dem zweiten Eingangsende des umgehbaren Hochpassfilters (15, 35) verbunden ist.

7. Digitale Teilnehmerleitungsschaltung nach Anspruch 6, wobei das umgehbare Hochpassfilter 15 Folgendes umfasst: ein Hochpassfilter und einen Umgehungsschalter; und
wobei der Umgehungsschalter parallel zwischen einem Eingangsende des Hochpassfilters und einem Ausgangsende des Hochpassfilters verbunden ist.

8. Digitale Teilnehmerleitungsschaltung nach Anspruch 2, wobei das umgehbare Hochpassfilter 15 unter Verwendung eines diskreten Simulators implementiert ist oder in einem analogen Bereich eines Chips integriert und implementiert ist oder in einem Zeitbereich eines digitalen Bereichs in einem Chip implementiert ist oder in einem Frequenzbereich eines digitalen Bereichs in einem Chip implementiert ist.

9. Digitale Teilnehmerleitungsvorrichtung, wobei die Vorrichtung die digitale Teilnehmerleitungsschaltung nach einem der Ansprüche 1 bis 8 umfasst.

## Revendications

1. Circuit de ligne d'abonné numérique, lequel circuit comprend :
un excitateur de ligne (11, 31), un module d'annulation d'écho (12, 32) et un module transformateur (13, 33),
le circuit de ligne d'abonné numérique étant **caractérisé en ce qu'**il comprend en outre un premier filtre passe-haut (14, 34) et un filtre passe-haut shuntable (15, 35),
une extrémité de sortie de l'excitateur de ligne (11, 31) étant reliée à une extrémité donnée du module d'annulation d'écho (12, 32) par le biais du premier filtre passe-haut (14, 34), l'autre extrémité du module d'annulation d'écho (12, 32) étant reliée au module transformateur (13, 33) et une extrémité de sortie du module d'annulation d'écho (12, 32) étant reliée au filtre passe-haut shuntable (15, 35) ;
le premier filtre passe-haut (14, 34) étant adapté à sélectionner un point de fréquence de coupure pour transmettre normalement un signal de liaison descendante en mode AnnexA, le signal de liaison descendante en mode AnnexA reçu de l'excitateur de ligne (11, 31) passant avec succès à travers le premier filtre passe-haut (14, 34) et étant transmis au module transformateur (13, 33) ;
le module transformateur (13, 33) étant un filtre passe-haut et étant adapté à transmettre et à recevoir un signal sur un même canal, un point de fréquence de coupure du filtre passe-haut étant adapté à être sélectionné lorsqu'un canal de réception du filtre passe-haut reçoit un signal de liaison montante en mode AnnexA et une partie de signaux ISDN, et un canal de transmission du filtre passe-haut étant adapté à transmettre un signal de liaison descendante en mode AnnexA ;
le premier filtre passe-haut (14, 34) étant adapté à transmettre un signal de liaison descendante en mode AnnexA ; et
le filtre passe-haut shuntable (15, 35) étant adapté à filtrer un signal ISDN lorsqu'il est utilisé en association avec un service ISDN, et étant shuntable et étant adapté à recevoir un signal de liaison montante en mode AnnexA lorsqu'il est utilisé en association avec un service POTS ;
lorsque le circuit de ligne d'abonné numérique est utilisé en association avec le service ISDN, le filtre passe-haut shuntable (15, 35) étant adapté à soumettre le signal reçu à un filtrage basse fréquence et à filtrer un signal ISDN, et une bande de fréquences de liaison montante en mode AnnexB étant adaptée à passer à travers le filtre passe-haut shuntable (15, 35) ; lorsque le circuit de ligne d'abonné numérique est utilisé en association avec le service POTS, le filtre passe-haut shuntable (15, 35) étant alors shunté pour permettre le passage d'une bande de fréquences de liaison montante en mode AnnexA ;
en mode AnnexA, une bande de fréquences de liaison montante de la DSL s'étendant de 25 kHz à 138 kHz, et le point de fréquence la plus basse d'une bande de fréquences de liaison descendante étant de 138 kHz ; en mode AnnexB, une bande de fréquences de liaison montante de la DSL s'étendant de 138 kHz à 276 kHz et le point de fréquence la plus basse d'une bande de fréquences de liaison descendante étant de 276 kHz.

2. Circuit de ligne d'abonné numérique selon la revendication 1, lequel circuit comprend en outre : une impédance (16),
une extrémité de sortie de l'excitateur de ligne (11, 31) étant reliée à une extrémité donnée de l'impédance (16) et à une extrémité donnée du module d'annulation d'écho (12, 32), l'autre extrémité de l'impédance (16) étant reliée à une extrémité donnée du premier filtre passe-haut (14, 34).

3. Circuit de ligne d'abonné numérique selon la revendication 2, dans lequel le module transformateur (13) comprend : un transformateur et un premier condensateur ;
le premier condensateur étant relié au milieu d'un enroulement primaire du transformateur ; et
une extrémité donnée d'un enroulement secondaire du transformateur constituant une première extrémité d'entrée du module transformateur (13, 33) et l'autre extrémité de l'enroulement secondaire du transformateur constituant une deuxième extrémité d'entrée du module transformateur (13, 33).

4. Circuit de ligne d'abonné numérique selon la revendication 3, dans lequel le premier filtre passe-haut (14) comprend un deuxième condensateur et un troisième condensateur, et l'impédance (16) comprend une première impédance et une deuxième impédance.

5. Circuit de ligne d'abonné numérique selon la revendication 4, dans lequel l'excitateur de ligne (11, 31) est un premier amplificateur différentiel ;
une première extrémité d'entrée du premier amplificateur différentiel étant reliée à une première extrémité de réception du circuit de ligne d'abonné numérique par le biais d'un quatrième condensateur, et une deuxième extrémité d'entrée du premier amplificateur différentiel étant reliée à une deuxième extrémité de réception du circuit de ligne d'abonné numérique par le biais d'un cinquième condensateur ; et
une première extrémité de sortie du premier amplificateur différentiel étant reliée à une première extrémité d'entrée du module transformateur (13, 33) par le biais de la première impédance et du deuxième condensateur, et une deuxième extrémité de sortie du premier amplificateur différentiel étant reliée à une deuxième extrémité d'entrée du module transformateur (13, 33) par le biais de la deuxième impédance et du troisième condensateur.

6. Circuit de ligne d'abonné numérique selon la revendication 5, dans lequel le module d'annulation d'écho (12, 32) comprend : une troisième impédance, une quatrième impédance, une cinquième impédance et une sixième impédance ;
une extrémité donnée de la troisième impédance étant reliée à la première extrémité de sortie du premier amplificateur différentiel, et l'autre extrémité de la troisième impédance étant reliée à une première extrémité d'entrée du filtre passe-haut shuntable (15, 35) ;
une extrémité donnée de la quatrième impédance étant reliée à la deuxième extrémité d'entrée du module transformateur (13, 33) et l'autre extrémité de la quatrième impédance étant reliée à la première extrémité d'entrée du filtre passe-haut shuntable (15, 35) ;
une extrémité donnée de la cinquième impédance étant reliée à la deuxième extrémité de sortie du premier amplificateur différentiel et l'autre extrémité de la cinquième impédance étant reliée à une deuxième extrémité d'entrée du filtre passe-haut shuntable (15, 35) ; et
une extrémité donnée de la sixième impédance étant reliée à la première extrémité d'entrée du module transformateur (13, 33) et l'autre extrémité de la sixième impédance étant reliée à la deuxième extrémité d'entrée du filtre passe-haut shuntable (15, 35).

7. Circuit de ligne d'abonné numérique selon la revendication 6, dans lequel le filtre passe-haut shuntable (15) comprend: un filtre passe-haut et un commutateur de shuntage ; et
le commutateur de shuntage est relié en parallèle entre une extrémité d'entrée du filtre passe-haut et une extrémité de sortie du filtre passe-haut.

8. Circuit de ligne d'abonné numérique selon la revendication 2, dans lequel le filtre passe-haut shuntable (15) est mis en oeuvre au moyen d'un simulateur discret, ou est intégré et mis en oeuvre dans un domaine analogique d'une puce, ou est mis en oeuvre dans un domaine temporel d'un domaine numérique dans une puce, ou est mis en oeuvre dans un domaine fréquentiel d'un domaine numérique dans une puce.

9. Dispositif de ligne d'abonné numérique, lequel dispositif comprend le circuit de ligne d'abonné numérique selon l'une quelconque des revendications 1 à 8.
